# EUROPEAN PATENT APPLICATION

(11) **EP 3 089 467 A1**
(43) Date of publication of application: **02.11.2016**
(21) Application number: 14874572.2
(22) Date of filing: 23.12.2014
(51) Int. Cl.: H04N 21/472

(54) **METHOD AND DEVICE FOR MOBILE COMMUNICATION TERMINAL TO CONTROL SMART TELEVISION TO PLAY VIDEO FILE**

(30) Priority: 23.12.2013 CN 201310715785; 27.12.2013 CN 201310734133
(71) Applicant: Le Shi Zhi Xin Electronic Technology (Tianjin) Limited, Beijing 100025 (CN); LE Holdings (Beijing) Co., Ltd., Beijing 100025 (CN)
(72) Inventor: HU, Hailong, Beijing 100025 (CN); YANG, Lingling, Beijing 100025 (CN); LIANG, Fan, Beijing 100025 (CN); LI, Zhen, Beijing 100025 (CN)
(74) Representative: Loock, Jan Pieter
(86) International application number: PCT/CN2014/094591
(87) International publication number: WO 2015/096687

(57) **Abstract**

The present disclosure provides a method and a device for a mobile communication terminal to control a smart TV to play a video file, wherein the mobile communication terminal establishes communication connections with the smart TV and an application server in advance. The method includes: providing a user operation entry in a user interface of the mobile communication terminal (101); receiving, through the user operation entry, a search command which is sent by a user and used for searching for a target video file (102); acquiring, based on the search command, relevant information of the target video file from the application server (103); judging whether the smart TV can establish a communication connection with the application server (104); if yes, sending the relevant information to the smart TV and sending a playing command to the smart TV (105); and if not, acquiring full data of the target video file from the application server, sending the full data to the smart TV, and sending a playing command to the smart TV (106). According to the present disclosure, the target video file can be searched for through the mobile terminal and pushed to the smart TV for playing, and the operation is convenient and fast.

## Description

### CROSS-REFERENCE TO RELATED APPLICATIONS

The present disclosure is based upon and claims priority to Chinese Patent Application No. 201310715785.6, filed on December 23, 2013 and entitled 'METHOD AND DEVICE FOR MOBILE COMMUNICATION TERMINAL TO CONTROL SMART TV TO PLAY VIDEO FILE', and Chinese Patent Application No. 201310734133.7, filed on December 27, 2013 and entitled 'METHOD AND DEVICE FOR MOBILE COMMUNICATION TERMINAL TO CONTROL SMART TV TO DELAY PLAYING VIDEO', which are incorporated herein by reference in their entirety.

### FIELD OF TECHNOLOGY

The present disclosure relates to the field of smart TV technology and in particular relates to a method and a device for a mobile communication terminal to control a smart TV to play a video file.

### BACKGROUND

With large-area intelligence of mobile phones and tablet computers, smart TVs also enter out lives gradually. The smart TVs, just like smart phones, each have a full-open platform with an operating system; users can download and play video files, which may be provided by a common server of smart TV systems or by other network servers or recommended interface devices; furthermore, users can freely select video files for playing through the smart TVs.

Correspondingly, to acquire and play the video files, the smart TVs generally are provided with searching and playing functional modules for video files; thus, a user can input a search keyword to a smart TV through the functional module to search in locally stored resources or network servers for a video file for playing by the smart TV.

In the prior art, a method for searching and playing a video file includes: after a user opens a video search interface and controls a soft keyboard by using a remote controller to input a search keyword in a search entry, executing a search operation; after a search result is displayed, entering a detail interface of a video file by triggering a confirm key of the remote controller and the like, and then clicking a play button for online playing, or clicking a download button to download a complete video file, locally saving the video file, and then playing the local video file by using a player.

However, the prior art has the following defects: a smart TV user only can do related searching and playing on the smart TV side and only can operate by using a remote controller; in case of proceeding a searching or downloading process, the smart TV will certainly display a screened search result, a detail interface, a downloading process and the like, and these displayed contents will certainly cover a display interface of a current playing TV program to affect the continuity of other people watching the current playing video; meanwhile, the remote controller has limited operation functions, for example, when the remote controller is employed to input keywords, characters must be input through a soft keyboard, and therefore, it is very inconvenient to operate by using the remote controller.

### SUMMARY

A technical problem to be solved by embodiments of the present disclosure is to provide a method for a mobile communication terminal to control a smart TV to play a video file, so that a limitation that only operations such as searching, receiving playing control commands and so on can be performed on a smart TV in the prior art is broken through and influence of the operation processes on current video playing is reduced.

In order to solve the problem, in one aspect, a method for a mobile communication terminal to control a smart TV to play a video file is provided, wherein the mobile communication terminal establishes communication connections with the smart TV and an application server in advance; on the mobile communication terminal side, the method includes: providing a user operation entry in a user interface of the mobile communication terminal; receiving, through the user operation entry, a search command which is sent by a user and used for searching for a target video file; acquiring, based on the search command, relevant information of the target video file from the application server; judging whether the smart TV can establish a communication connection with the application server; if the smart TV can establish the communication connection with the application server, sending the relevant information to the smart TV and sending a playing command to the smart TV, so that the smart TV downloads full data of the target video file from the application server according to the relevant information and plays the full data; and if the smart TV can not establish the communication connection with the application server, acquiring the full data of the target video file from the application server, sending the full data to the smart TV, and sending a playing command to the smart TV, so that the smart TV plays the full data.

Optionally, after judging whether the smart TV can establish the communication connection with the application server, the method further includes: if the smart TV can not establish the communication connection with the application server, sending the relevant information to a relay server, so that the relay server downloads the full data from the application server according to the relevant information, and then sending, through a communication connection between the relay server and the smart TV, the full data in the form of streaming media to the smart TV in groups for playing.

Optionally, the step of providing the user operation entry in the user interface of the mobile communication terminal includes: providing the user operation entry in such a manner of displaying an operable button in the user interface of the mobile communication terminal; or providing the user operation entry in such a manner of prompting text input in the user interface of the mobile communication terminal; or providing the user operation entry in such a manner of prompting voice input in the user interface of the mobile communication terminal.

Optionally, the step of judging whether the smart TV can establish the communication connection with the application server includes: receiving, through the user operation entry, a status acquiring command which is sent by a user and used for acquiring a network connection status of the smart TV; sending the status acquiring command to the smart TV; and receiving network connection status parameters fed back by the smart TV, and judging whether the smart TV can establish the communication connection with the application server according to the network connection status parameters.

Optionally, the method further includes: receiving and synchronously displaying playing prompting information fed back by the smart TV to the target video file.

Optionally, the method further includes: receiving, through the user operation entry, a delayed playing command which is sent by a user and used for sending the target video file to the smart TV for delayed playing; determining a time point of delayed playing based on the delayed playing command; acquiring description information or the full data of the target video file; and pushing, through the communication connection, the description information or the full data of the target video file to the smart TV for playing.

Wherein the step of pushing, through the communication connection, the description information or the full data of the target video file to the smart TV for playing specifically includes: at the time point of delayed playing, pushing, through the communication connection, the description information or the full data of the target video file to the smart TV for playing; or pushing, through the communication connection, the description information or the full data of the target video file to the smart TV, and sending a command of playing a target video to the smart TV at the time point of delayed playing so that the smart TV plays the target video.

Optionally, the step of determining the time point of delayed playing based on the delayed playing command includes: based on the delayed playing command, enabling a thread for continuously acquiring a playing status of a player of the smart TV; and determining a time point when the thread finds out that playing of a preset playing program in the player of the smart TV is finished as the time point of delayed playing.

Optionally, the step of determining the time point of delayed playing based on the delayed playing command specifically is: determining the time point of delayed playing according to time information carried in the delayed playing command.

In another aspect, the embodiments of the present disclosure provide a method for a mobile communication terminal to control a smart TV to delay playing a video, wherein the mobile communication terminal establishes a communication connection with the smart TV in advance; on the mobile communication terminal side, the method includes: providing a user operation entry in a user interface of the mobile communication terminal; receiving, through the user operation entry, a command which is sent by a user and used for sending a target video file to the smart TV for delayed playing; determining a time point of delayed playing based on the delayed playing command; acquiring description information or full data of the target video file; and pushing, through the communication connection, the description information or the full data of the target video file to the smart TV for playing; wherein, the step of pushing, through the communication connection, the description information or the full data of the target video file to the smart TV for playing specifically includes: at the time point of delayed playing, pushing, through the communication connection, the description information or the full data of the target video file to the smart TV for playing; or pushing, through the communication connection, the description information or the full data of the target video file to the smart TV, and sending a command of playing a target video to the smart TV at the time point of delayed playing so that the smart TV plays the target video.

Optionally, before the step of receiving, through the user operation entry, the command which is sent by the user and used for sending the target video file to the smart TV for delayed playing, the method further includes: receiving, through the user operation entry, a search command which is sent by the user and used for searching for the target video file; acquiring, based on the search command, relevant information of the target video file from an application server; judging whether the smart TV can establish a communication connection with the application server; if the smart TV can establish the communication connection with the application server, downloading, by the smart TV, the full data of the target video file from the application server according to the relevant information; and if the smart TV can not establish the communication connection with the application server, acquiring the full data of the target video file from the application server.

In another aspect, the embodiments of the present disclosure further provide a device for a mobile communication terminal to control a smart TV to play a video file, including: a communication connection module configured to establish communication connections between the mobile communication terminal and the smart TV as well as between the mobile communication terminal and an application server; a user entry module configured to provide a user operation entry in a user interface of the mobile communication terminal; a command input module configured to receive, through the user operation entry, a search command which is sent by a user and used for searching for a target video file; a video searching module configured to acquire, based on the search command, relevant information of the target video file from the application server; a judgment module configured to judge whether the smart TV can establish a communication connection with the application server; a first sending module configured to, if the circumstance that the smart TV can establish the communication connection with the application server, send the relevant information to the smart TV and send a playing command to the smart TV, so that the smart TV downloads full data of the target video file from the application server according to the relevant information and plays the full data; and a second sending module configured to, if the smart TV can not establish the communication connection with the application server, acquire the full data of the target video file from the application server, send the full data to the smart TV, and send a playing command to the smart TV, so that the smart TV plays the full data.

Optionally, the device further includes: a third sending module configured to, if the smart TV can not establish the communication connection with the application server, send the relevant information to a relay server, so that the relay server downloads the full data from the application server according to the relevant information, and then send, through a communication connection between the relay server and the smart TV, the full data in the form of streaming media to the smart TV in groups for playing.

Optionally, the device further includes a feedback module configured to receive and synchronously display playing prompting information fed back by the smart TV to the target video file.

Optionally, the command input module is further configured to receive, through the user operation entry, a delayed playing command which is sent by a user and used for sending the target video file to the smart TV for delayed playing; the device further includes: a delay determination module configured to determine a time point of delayed playing based on the delayed playing command; and a video information acquiring module configured to acquire description information or the full data of the target video file;

Wherein, the first sending module specifically executes the following step: at the time point of delayed playing, sending the relevant information to the smart TV and sending a playing command to the smart TV; or when the delayed playing command is received, sending the relevant information to the smart TV, and sending a playing command to the smart TV at the time point of delayed playing.

Wherein, the second sending module specifically executes the following step: at the time point of delayed playing, sending the full data to the smart TV and sending a playing command to the smart TV; or when the delayed playing command is received, sending the full data to the smart TV, and sending a playing command to the smart TV at the time point of delayed playing.

Optionally, the delay determination module specifically executes the following steps: based on the delayed playing command, enabling a thread for continuously acquiring a playing status of a player of the smart TV; and determining a time point when the thread finds out that playing of a preset playing program in the player of the smart TV is finished as the time point of delayed playing.

Optionally, the delay determination module specifically executes the following step: determining the time point of delayed playing according to time information carried in the delayed playing command.

In another aspect, the embodiments of the present disclosure further provide a device for a mobile communication terminal to control a smart TV to delay playing a video, including: a communication connection module configured to establish a communication connection between the mobile communication terminal and the smart TV in advance; a user entry module configured to provide a user operation entry in a user interface of the mobile communication terminal; a delayed playing command receiving module configured to receive, through the user operation entry, a command which is sent by a user and used for sending a target video file to the smart TV for delayed playing; a playing time determination module configured to determine a time point of delayed playing based on the delayed playing command; a video information acquiring module configured to acquire description information or full data of the target video file; and a sending module configured to push, through the communication connection, the description information or the full data of the target video file to the smart TV for playing; wherein, the operation of pushing, through the communication connection, the description information or the full data of the target video file to the smart TV for playing specifically includes: at the time point of delayed playing, pushing, through the communication connection, the description information or the full data of the target video file to the smart TV for playing; or pushing, through the communication connection, the description information or the full data of the target video file to the smart TV, and sending a command of playing a target video to the smart TV at the time point of delayed playing so that the smart TV plays the target video.

Optionally, the device further includes: a command input module configured to receive, through the user operation entry, a search command which is sent by the user and used for searching for the target video file; a video search module configured to acquire, based on the search command, relevant information of the target video file from an application server; and a judgment module configured to judge whether the smart TV can establish a communication connection with the application server; the sending module specifically includes: a first sending module configured to, if the smart TV can establish the communication connection with the application server, send the relevant information to the smart TV and send a playing command to the smart TV, so that the smart TV downloads the full data of the target video file from the application server according to the relevant information and plays the full data at the time point of delayed playing; and a second sending module configured to, if the smart TV can not establish the communication connection with the application server, acquire the full data of the target video file from the application server, send the full data to the smart TV, and send a playing command to the smart TV, so that the smart TV plays the full data at the time point of delayed playing.

In another aspect, the embodiments of the present disclosure further provide a computer-readable recording medium on which a program for executing any method of the embodiments of the present disclosure is recorded.

Compared with the prior art, any of the above-mentioned technical solutions has the following advantages: by using the method for the mobile communication terminal to control the smart TV to play the video file provided by the embodiments of the present disclosure, compared with limitation conditions such as inconvenient operations due to searching application by using a remote controller, requirement that the remote controller must emit control signals by facing a smart TV and so on in the prior art, the present disclosure may implement searching and playing of a target video file for the smart TV through the mobile communication terminal, and the operations are convenient and fast.

In addition, even though the smart TV can not establish the communication connection with the application server, the full data of the target video file also can be downloaded into the mobile communication terminal first, and then sent, through the communication connection between the communication terminal and the smart TV, to the smart TV for playing immediately, and therefore, the user experience of the smart TV is enhanced.

Besides, as the search of the target video file is carried out on the mobile communication terminal, it is unnecessary to display a playing control of the target video file on a display screen of the smart TV, and therefore, influence of processes of searching, playing control and the like on a video file is avoided and the user experience of the smart TV is further enhanced.

### BRIEF DESCRIPTION OF THE DRAWINGS

Fig. 1 is a flow diagram of a first embodiment of the present disclosure;
Fig. 2 is a flow schematic diagram of a first embodiment of the present disclosure;
Fig. 3 is a flow diagram of a second embodiment of the present disclosure;
Fig. 4 is a flow diagram of a third embodiment of the present disclosure;
Fig. 5 is a structural block diagram of a fourth embodiment of the present disclosure;
Fig. 6 is a structural block diagram of a fifth embodiment of the present disclosure; and
Fig. 7 is a structural block diagram of a sixth embodiment of the present disclosure.

### DESCRIPTION OF THE EMBODIMENTS

To make the purposes, features and advantages of the present disclosure more obvious and understandable, the present disclosure is further described in detail below in combination with accompanying drawings and specific embodiments.

Executive bodies involved in the embodiments of the present disclosure include: a mobile communication terminal (e.g., a smart phone and a personal digital aid), a smart TV, and an application server for providing video files for the smart TV or a relay server for pushing video files for the smart TV. In specific implementation processes, the mobile communication terminal, the smart TV and the application server or the relay server are independent of each other, and also connected with each other to realize the technical solutions provided by the present disclosure. For the sake of convenient description, the embodiments of the present disclosure are described from the perspective of the mobile communication terminal.

For the sake of easy understanding, it needs to be first noted that, in the embodiments of the present disclosure, an application (APP) running on the mobile communication terminal can be provided. For example, the APP can be named as a 'TV aid', which can be installed by the user in his/her mobile terminal device. Correspondingly, a corresponding background application is installed in an operating system of the smart TV to realize interaction with the TV aid on the mobile communication terminal side, or realize indirect interaction through the relay server and realize a function of controlling the smart TV to play a video file through the mobile communication terminal.

Under the circumstance that the TV aid is installed in the mobile communication terminal and the smart TV has the corresponding background application, the smart TV and the mobile communication terminal are connected to the same local area network; for example, they can access to the network through the same WIFI (Wireless Fidelity). In this way, the television aid in the mobile communication terminal may establish a communication connection with the smart TV through a private communication protocol; subsequent signal/data transmissions and the like all are based on the communication connection. Specifically, after the communication connection is established between the mobile communication terminal and the smart TV through a certain port, each background application of the smart TV side may monitor messages received over the port. A specific implementation process of message interaction may be as follows: after the mobile communication terminal sends a message to the smart TV, the operating system of the smart TV will receive the message and broadcast the message to each background application in the smart TV; each background application may determine whether or not to process the message after receiving the message; if not, the message may be discarded, and otherwise, subsequent operations such as downloading and playing of a video file and so on are carried out.

### Embodiment 1

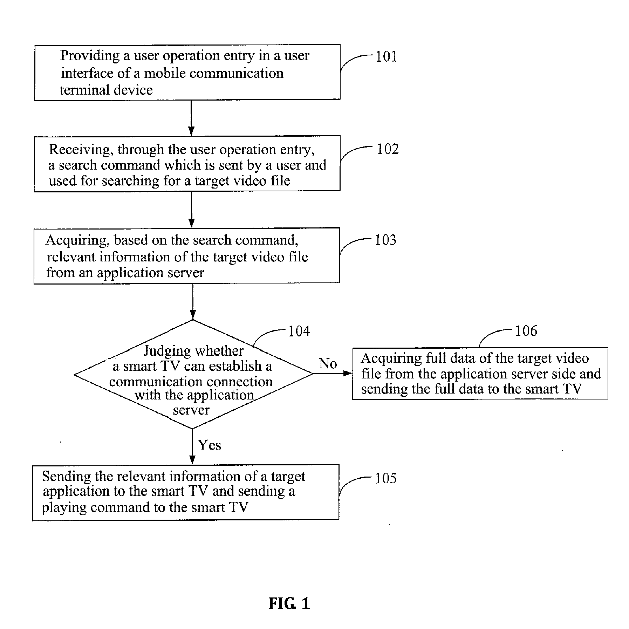

Firstly, referring to Fig. 1, illustrated is a flow diagram of a method embodiment for a mobile communication terminal to control a smart TV to play a video file of the present disclosure; this embodiment is based on: the mobile communication terminal establishes a communication connection with the smart TV in advance, and also establishes a communication connection with an application server. The application server may be specifically used for providing video file resources for the smart TV. The method includes:

S101, a user operation entry in a user interface of the mobile communication terminal is provided.

An application, for example, a TV aid, is installed on the mobile communication terminal side and can be used for providing a user interface for a user; meanwhile, a specific user operation entry for initiating video searching, for example, a video searching button or a hot video recommending button, is provided on the user interface. In this way, after the user enables the TV aid application in the mobile communication terminal device, the user can see such an operation entry in the user interface of this application. When the user performs corresponding operations such as clicking and so on through the operation entry, the TV aid equivalently receives a command which is initiated by the user and used for searching for a video file.

S102, a search command which is sent by a user and used for searching for a target video file is received through the user operation entry.

The user can send commands to the TV aid through the user operation entry in the TV aid, and then the TV aid sends various operation commands to the smart TV, the application server or a relay server. That is to say, in the implementation process of the embodiments of the present disclosure, interaction between the user and the mobile communication terminal, interaction between the mobile communication terminal and the application server, interaction between the mobile communication terminal and the smart TV or interaction of the mobile communication terminal and the smart TV with the relay server may be involved.

The step S102 mainly involves the interaction between the user and the mobile communication terminal. With respect to a specific interaction implementation manner between the user and the mobile communication terminal, it is related to an implementation manner of the user operation entry. There can be a plurality of implementation manners of the user operation entry, and correspondingly, there also are a plurality of interaction implementation manners between the user and the mobile communication terminal.

For example, the user operation entry is provided in such a manner of displaying an operable button in the user interface of the mobile communication terminal. At present, as most mobile phones are provided with a touch screen, the user operation entry can be provided through the operable button displayed on the user interface and the like and a user can directly click a corresponding button on a touch screen to send a command of searching for a video file suitable for the smart TV to play. The button can be a button control, for example, a 'history viewing button' or a 'hot recommended video viewing button'. For the TV aid, no matter in which specific interaction mode a user submits a video searching request, the TV aid may generate a corresponding search command for searching for a video file and send, through a communication connection, the command to the application server or the relay server.

Or, the user operation entry is provided in such a manner of prompting text input in the user interface of the mobile communication terminal. Its specific implementation manner may be providing a search text box in the user interface of the TV aid as the user operation entry. A user may input relevant information of a video file, such as a name, a director name, actor names, a story line keyword and so on, in the search text box through a soft keyboard. Correspondingly, the TV aid may identify the input text and generate a video searching command that is sent to the server through a communication connection after being confirmed by the user.

Or, the user operation entry is provided in such a manner of prompting voice input in the user interface of the mobile communication terminal device. Its specific implementation manner may be providing a voice input button in the user interface of the TV aid as the user operation entry. After a user clicks the voice input button, a voice input device, for example, a microphone, on the mobile communication terminal device may be enabled to receive voice information input by the user; for example, the user can say the name of a target video, like " 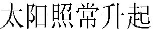 (The Sun Also Rises)', to the microphone of the mobile communication terminal device, and correspondingly, the TV aid may identify the voice input signal and generate a video searching command that is sent to the application server or the relay server through a network after being confirmed by the user.

S103, relevant information of the target video file is acquired from the application server based on the search command.

The relevant information of the target video file includes such information as a name, a story line description, a poster, a downloading address and a data size of the video file, and so on.

S104, whether the smart TV can establish a communication connection with the application server is judged.

Generally, the application server establishes a communication connection with a client through the Internet; here, the smart TV is regarded as the client. Hence, in this case, this step can be understood as judging whether the smart TV accesses to the Internet.

This step may specifically include:
Step 1, receiving, by the user operation entry of the mobile communication terminal, a command which is sent by a user and used for acquiring network connection status parameters of the smart TV;
Step 2, sending the command to the smart TV through a communication connection between the mobile communication terminal and the smart TV;
Step 3, receiving network connection status information fed back by the smart TV;
corresponding to the Step 2 and the Step 3, on the smart TV side, after the command of acquiring the current network connection status parameters sent by the mobile communication terminal is received, the current network connection status parameters such as a local connection status, a network connection duration, a data transmission rate and so on are acquired. The parameters reflecting the network connection status are packaged into a predetermined data format and fed back to the mobile communication terminal.
Step 4, judging whether the smart TV can establish a communication connection with the application server according to the network connection status information.
S105, if the communication connection can be established, sending the relevant information to the smart TV and sending a playing command to the smart TV, so that the smart TV downloads streaming media data of the target video file from the application server according to the relevant information and plays the streaming media data;
Specifically, if the smart TV can establish the communication connection with the application server, the mobile communication terminal sends the relevant information, like a downloading address URL, of the target video file to the smart TV. Correspondingly, on the smart TV side, after the relevant information, like the downloading address, of the target video file is received, the smart TV sends a request for downloading the streaming media data of the target video file to the application server side through the communication connection established with the application server. The application server sends, after receiving the request for downloading the streaming media data of the target video file, the data of the target video file in groups to the smart TV, so that the smart TV plays the data in real time. This process does not need to download the full data of the target video file from the application server side to the smart TV side for local storage before playing, thereby saving data traffic of the smart TV as well as the storage space of the smart TV.

Wherein, in the present embodiment of the present disclosure, the operation of sending the relevant information of the target video file to the smart TV and sending the playing command to the smart TV may specifically include: providing a second user operation entry within a video search result display interface, and receiving, through the second user operation entry, a command of sending the information of the target video file to the smart TV as well as a command of triggering the smart TV to play the target video. For example, a button response area that looks like a TV and is named as 'play on TV' is provided at the top of the video search result display interface; when a user drags the ICON of the target video file to the button response area, it indicates that the mobile communication terminal sends the relevant information of the target video file to the smart TV, so that the smart TV downloads the data of the target video from the application server according to the relevant information of the target video. Meanwhile, a command of playing the target video is sent to the smart TV.

In addition, the operation of sending the relevant information of the target video file to the smart TV and sending the playing command to the smart TV further may specifically include:
firstly, providing a third user operation entry within the video search result display interface, and receiving, through the third user operation entry, a command of entering a detail page of the target video file; and
receiving, through a preset button control within the detail page of the target video file, the command of sending the information of the target video file to the smart TV for playing.

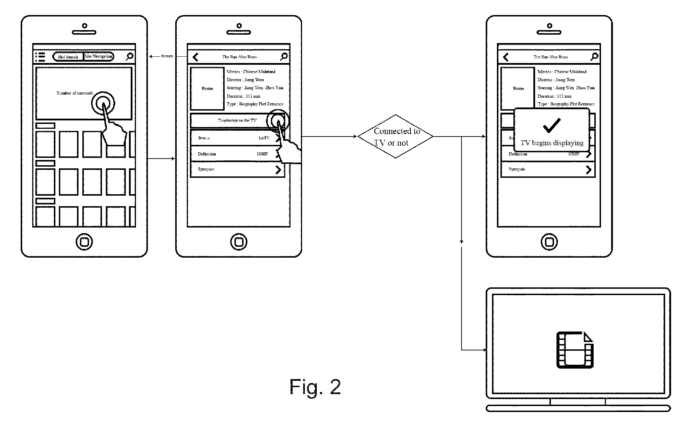

The flow of the method for the mobile communication terminal to control the smart TV to play the video file of the present disclosure is described by taking the target video 'The Sun Also Rises' as an example below. Referring to Fig. 2, an icon named as 'The Sun Also Rises' is selected within the video search result display interface, and the detail description page of the video file is opened by clicking, in which information, such as video source, definition, story line description, poster, director name, leading actor names, time duration, type and so on, is displayed and a control button named as 'Play on TV' is also set; when the user clicks the button, the mobile communication terminal sends the relevant information of the target video file and sends a control command of playing the target video to the smart TV. After receiving the information and the command, the smart TV downloads the streaming media data of the target video from the application server and plays the data, and also feeds back TV playing information, i.e., 'TV begins playing', to the mobile communication terminal.

S106, if the communication connection can not be established, the full data of the target video file is acquired from the application server, and the full data of the target video file to the smart TV for playing is sent through the communication connection between the mobile terminal and the smart TV.

Specifically, if the smart TV can not establish the communication connection with the application server, the mobile communication terminal sends a request for downloading the target video file to the application server. On the application server side, after the request for downloading the target application video file is received, the application server sends, through the communication connection established with the mobile communication terminal, the full data of the target video to the mobile communication terminal. Next, the mobile communication terminal sends, through the communication connection with the smart TV, the full data of the target video file to the smart TV, and sends the playing command to the same for playing.

In short, in this embodiment of the present disclosure, an operation entry for searching for playing videos for a smart TV can be provided for a user on the mobile communication terminal, so that the user can directly send a search command for searching for a target video through the mobile communication terminal; then, the mobile communication terminal may send, through a pre-established communication connection, a video searching command to a server, and after receiving the video searching command, the server executes a video searching operation and returns relevant information of a target video file to the mobile communication terminal. The mobile communication terminal sends the target video to the smart TV in different ways according to communication connection conditions of the smart TV and an application server. As user operation interfaces of most existing mobile communication terminal devices are quite friendly and various functions and operations are simple and easy to learn, users can find out a video searching functional module from the mobile communication terminal more easily, compared with a remote controller. Additionally, the existing mobile communication terminals generally each have a touch screen or a voice function, and therefore, the video searching command can be sent to the application server and the full data of the target video can be sent to the smart TV just by finger pressing or sentence saying, and the operations are simpler, convenient and fast. Meanwhile, as video searching and video playing triggering both are completed on the mobile communication terminal side, influence of video searching and video playing control display on a current playing video of the smart TV is avoided, and user experience of the smart TV is enhanced indirectly.

In addition, in another embodiment of the present disclosure, with regard to the case that the smart TV can not establish the communication connection with the application server, the target video file also can be sent to the smart TV through a relay server. In this embodiment, the mobile communication terminal and the smart TV both establish communication connections with the relay server independently; the mobile communication terminal may not directly communicate with the smart TV, and the relay server establishes the communication connection with the application server.

Specifically, if the mobile communication terminal finds out that the smart TV can not establish the communication connection with the application server, the relevant information of the target video file may be sent, through the communication connection between the mobile communication terminal and the relay server, to the relay server, and meanwhile, a control command of pushing the target video file to the smart TV is sent to the relay server; the relevant information includes, but not limited to, a downloading address, and specific description is made by taking the downloading address as an example. The relay server, after receiving the downloading address, sends a request for downloading the full data of the target video file to the application server through the communication connection with the application server; the application server sends the full data of the target video file to the relay server after receiving the request. After receiving the data of the target video file, the relay server, according to a control command which is received from the mobile communication terminal and used for pushing the full data of the target video file to the smart TV or a request which is initiated by the smart TV thereto and used for acquiring the target video, sends the data of the target video file in the form of the streaming media to the smart TV in groups through the communication connection between the relay server and the smart TV.

In the present embodiment, the relay server may be one server dedicated to providing the smart TV with various services, such as various applications, video data, operating systems and so on. The smart TV and the mobile communication terminal may establish communication connections with the relay server in an account login manner.

Optionally, in another method embodiment for the mobile communication terminal to control the smart TV to play the video file of the present disclosure, the following step may be further included:
the mobile communication terminal receives and synchronously displays playing prompting information fed back by the smart TV to the target video file.

The feedback information receiving process may be direct receiving through the communication connection between the mobile terminal and the smart TV, or indirectly receiving or acquiring a playing condition of the target video file on the smart TV side through the relay server; as shown in Fig. 2, the mobile communication terminal receives and displays the information that 'TV begins playing' fed back by the smart TV side.

The step of displaying the playing prompting information of the target video file on the mobile communication terminal is added to the present embodiment on the basis of the above-mentioned embodiments; it may achieve synchronous display, on the mobile communication terminal side, of a downloading or playing progress of the target video file on the smart TV side, so that the mobile communication terminal immediately connects an execution condition of the target video file and the user experience of the smart TV is enhanced.

### Embodiment 2

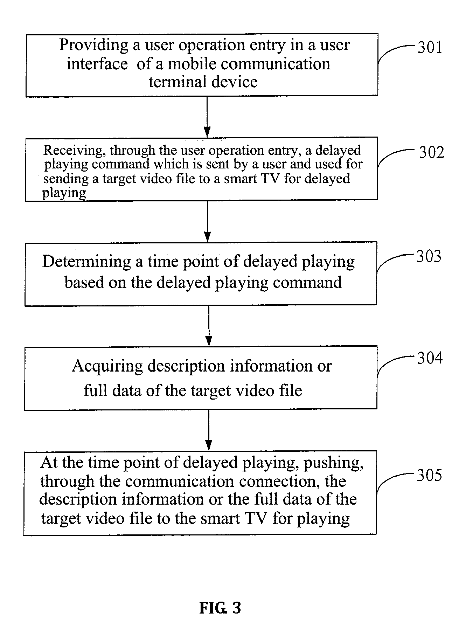

Referring to Fig. 3, illustrated is a flow diagram of a method for a mobile communication terminal to control a smart TV to play a video file of the present disclosure; this embodiment is based on that: the mobile communication terminal establishes a communication connection with the smart TV in advance, and also establishes a communication connection with a server. The server may be specifically used for providing video file resources for the smart TV. The method includes:
S301, a user operation entry is provided in a user interface of the mobile communication terminal.

An application, for example, a TV aid, is installed on the mobile communication terminal side and can be used for providing a user interface for a user; meanwhile, a specific user operation entry for initiating delayed playing, for example, a delayed playing button, is provided on the user interface. In this way, after the user selects a target video in an interface of the TV aid application in the mobile communication terminal device, the user can see such an operation entry in the user interface of this application. When the user performs such operations as setting playing time of the target video and/or clicking to confirm delayed playing through the operation entry, the TV aid equivalently receives a command which is initiated by the user and used for delaying playing for the target video file.

S302, a delayed playing command which is sent by a user and used for pushing a target video file to the smart TV side for delayed playing is received through the user operation entry.

The user can send commands to the TV aid through the user operation entry in the TV aid, and then the TV aid sends various operation commands to the smart TV or the server. That is to say, in the implementation process of the embodiments of the present disclosure, interaction between the user and the mobile communication terminal, interaction between the mobile communication terminal and the smart TV and interaction between the mobile communication terminal and the server may be involved.

The step S302 mainly involves the interaction between the user and the mobile communication terminal. With respect to a specific interaction implementation manner between the user and the mobile communication terminal, it is related to an implementation manner of the user operation entry. There can be a plurality of implementation manners of the user operation entry, and correspondingly, there also are a plurality of interaction implementation manners between the user and the mobile communication terminal.

For example, the user operation entry is provided in such a manner of displaying an operable button in the user interface of the mobile communication terminal. At present, as most mobile phones are provided with a touch screen, the user operation entry can be provided through the operable button displayed on the user interface and the like and a user can directly click a corresponding button on a touch screen to send a command of delaying playing a video file. The button can be a button control 'delayed playing' generated after the user sets a playing time point. For the TV aid, no matter in which specific interaction mode a user submits a request for delaying playing a target video, the TV aid may generate a corresponding delayed playing command and send, through a communication connection, the command to the smart TV.

Or, the user operation entry is provided in such a manner of prompting text input in the user interface of the mobile communication terminal. Its specific implementation manner may be providing a delayed playing text box in the user interface of the TV aid as the user operation entry. A user may input a specific playing time point, playing after the playing of one TV program is finished or the like in the delayed playing text box through a soft keyboard, and then click an enter key to trigger the delayed playing command. Correspondingly, the TV aid may identify the input text and generate the delayed playing command that is sent to the smart TV through a communication connection after being confirmed by the user.

Or, the user operation entry is provided in such a manner of prompting voice input in the user interface of the mobile communication terminal device. Its specific implementation manner may be providing a voice input button in the user interface of the TV aid as the user operation entry. After a user clicks the voice input button, a voice input device, for example, a microphone, on the mobile communication terminal device may be enabled to receive voice information input by the user; for example, the user can say 'playing a target video after 30 minutes', 'playing after current program playing is finished', 'playing after 'XXX program playing is finished' or the like to the microphone of the mobile communication terminal device, and correspondingly, the TV aid may identify the voice input signal and generate a target video playing delaying command that is sent to the smart TV through a network after being confirmed by the user.

S303, a time point of delayed playing is determined based on the delayed playing command.

This step is to determine a specific time point of sending a playing command to the smart TV according to the received delayed playing command. The time point of delayed playing can be preset by a user or determined according to the current playing status of the smart TV. This step will be further described in detail in subsequent contents.

S304, relevant information or full data of the target video file is acquired.

Wherein, the relevant information of the target video file may include such information as the name of the target video file, a data size, a director name, actor names and a file source.

The step S304 may specifically be: acquiring, from the server, locally stored resources, other recommended interfaces or the like, the relevant information of the target video file, in particular, the data source address information of the target video,

For example, in the steps S101 to S103 of the first embodiment, the relevant information of the target video file is acquired from the application server; moreover, in the step S106 of the first embodiment, the full data of the target video file is downloaded from the application server side.

In case that the full data of the target video is stored in the server, the mobile communication terminal may only acquire the relevant information of the target video file and then send the relevant information to the smart TV and notify the smart TV of the playing time point of the target video. The full data or the streaming media data of the target video is acquired by the smart TV from the server according to the received relevant information, such as a URL, of the target video file, without being downloaded from the server by the mobile communication terminal, so that the data traffic of the mobile communication terminal is saved.

S305, at the time point of delayed playing, the relevant information or the full data of the target video file is pushed to the smart TV for playing through the communication connection.

That is, in the second embodiment of the present embodiment, a time difference between receiving a command triggered by the user and used for delaying playing the target video, and actually pushing the data of the target video and sending the playing command by the mobile communication terminal is just equal to a delay time duration. In other words, the mobile communication terminal delays in pushing the relevant information of the target video. Correspondingly, on the smart TV side, downloading and/or playing program(s) may be still immediately enabled upon receiving the target video. There are two cases in which the smart TV acquires and plays the data of the target video file:
Specifically, if the smart TV can establish the communication connection with the server, the mobile communication terminal sends the relevant information, like a downloading address URL, of the target video file to the smart TV at the time point of delayed playing. Correspondingly, on the smart TV side, after the relevant information, like the downloading address, of the target video file is received, the smart TV sends a request for downloading the streaming media data of the target video file, to the server through the established communication connection with the server. After receiving the request for downloading the streaming media data of the target video file, the server sends the data of the target video file in groups to the smart TV at the time point of delayed playing, so that the smart TV plays the target video at the time point of delayed playing. This process does not need to download the full data of the target video file from the server side to the smart TV side for local storage before playing, thereby saving the data traffic of the smart TV as well as the storage space of the smart TV.

On the other hand, if the smart TV can not establish the communication connection with the server, the mobile communication terminal firstly sends a request for downloading the target video file to the server to acquire the full data of the target video file from the server. At the time point of delayed playing determined in the step S303, the full data of the target video is pushed, through the communication connection between the mobile communication terminal and the smart TV, to the smart TV, and simultaneously, a command of playing the target video file is sent to the smart TV, so that the smart TV plays the target video file in real time.

Additionally, the step S303 in the present embodiment of the present disclosure can be implemented according to different requirements of the user; for example, when the user requires playing the target video after the playing of the current playing program of the smart TV is finished, or playing the target video after the playing of a preset video, for instance, 'Where are we going Dad' about to play at 30:30, is finished by the smart TV, the step S303 may specifically be: based on the delayed playing command, enabling a thread for continuously acquiring a playing status of a player of the smart TV, and after a status that the playing of the preset playing program is finished, sending the command of playing the target video to the smart TV.

Correspondingly, the step S305 of, at the time point of delayed playing, pushing, through the communication connection, the relevant information or the full data of the target video file to the smart TV for playing specifically is:

pushing the relevant information or the full data of the target video file to the smart TV for playing upon finding out that the playing of the preset playing program is finished.

Besides, when the user requires playing the target video at a specifically set time point, the step S303 may specifically be:
determining the time point of delayed playing according to time information carried in the command which is sent by the user and used for delaying playing the target video file, and enabling a delay timer for timing.

Correspondingly, the step S305 of, at the time point of delayed playing, pushing, through the communication connection, the relevant information or the full data of the target video file to the smart TV for playing specifically is:
when the timing of the delay timer ends, pushing the relevant information or the full data of the target video file to the smart TV for playing.

It can be seen that, by adopting the second method embodiment for the mobile communication terminal to control the smart TV to play the video file, the mobile communication terminal may determine the time point of delayed playing of the target video in advance according to the delayed playing command from the user, and then send the relevant information or the full data of the target video to the smart TV for playing at the time point of playing. In the embodiment of the present disclosure, a user operation entry for sending a command of delaying playing the target video to the smart TV can be provided on the mobile communication terminal side to a user, and the user can set the delayed playing time of the target video through the user operation entry set by the mobile communication terminal, and therefore, the operation degree of freedom of target video playing is effectively increased, and further the user experience of the smart TV is enhanced.

### Embodiment 3

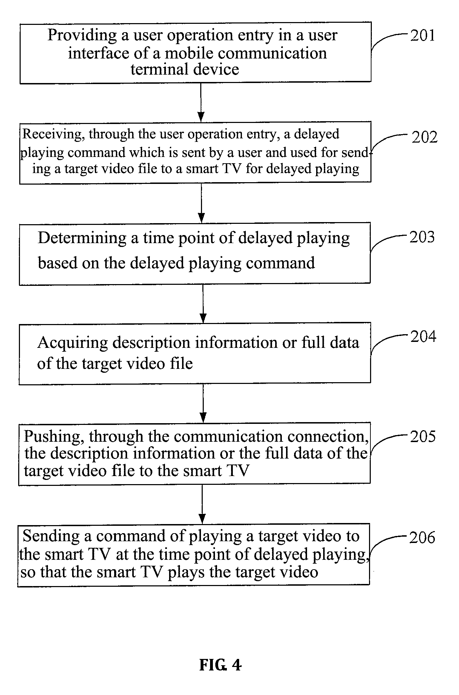

Referring to Fig. 4, illustrated is a schematic diagram of a method for a mobile communication terminal to control a smart TV to play a video file of the present disclosure; the method is also implemented on the basis of the mobile communication terminal establishing a communication connection with the smart TV in advance; on the mobile communication terminal side, the method includes:
S201, providing a user operation entry in a user interface of the mobile communication terminal;
S202, receiving, through the user operation entry, a command which is sent by a user and used for pushing a target video file to the smart TV side for delayed playing;
S203, determining a time point of delayed playing based on the delayed playing command;
S204, acquiring relevant information or full data of the target video file;
S205, pushing, through the communication connection, the description information or the full data of the target video file to the smart TV; and
S206, sending a command of playing a target video to the smart TV at the time point of delayed playing, so that the smart TV plays the target video.

Wherein, the step S203 of determining the time point of delayed playing based on the delayed playing command may specifically include:
based on the delayed playing command, enabling a thread for continuously acquiring a playing status of a player of the smart TV, and after a status that the playing of a current or preset playing program is finished, sending the command of playing the target video to the smart TV; and
correspondingly, the step of S206 of sending the command of playing the target video to the smart TV at the time point of delayed playing so that the smart TV plays the target video is specifically as follows:
   sending the command of playing the target video to the smart TV so that the smart TV plays the target video upon finding out that the playing of the preset playing program is finished.

In another embodiment of the present disclosure, the step S203 of determining the time point of delayed playing based on the delayed playing command may further specifically include:
determining the time point of delayed playing according to time information carried in the command which is sent by the user and used for delaying playing the target video file, and enabling a delay timer for timing; and
correspondingly, the step of S206 of sending the command of playing the target video to the smart TV at the time point of delayed playing so that the smart TV plays the target video is specifically as follows:
when the timing of the delay timer ends, sending the command of playing the target video to the smart TV so that the smart TV plays the target video.

The third embodiment of the present disclosure differs from the second embodiment in that: after the command triggered by the user and used for delaying playing the target video file is received, the mobile communication terminal firstly sends the relevant information of the target video file to the smart TV, so that the smart TV downloads the data of the target video file from the server side to prepare for playing the target video at the time point of delayed playing determined in the step S203; and secondly, at the time point determined in the step S203, the mobile communication terminal sends the command of playing the target video file to the smart TV, and correspondingly, on the smart TV side, the player is enabled to start playing the target video in response to the playing command.

### Embodiment 4

This embodiment is a method embodiment for a mobile communication terminal to control a smart TV to delay playing a video of the present disclosure; the method embodiment is also implemented on the basis of the mobile communication terminal establishing a communication connection with the smart TV in advance; on the mobile communication terminal side, the method includes:
S401, providing a user operation entry in a user interface of the mobile communication terminal;
S402, receiving, through the user operation entry, a command which is sent by a user and used for pushing a target video file to the smart TV side for delayed playing;
S403, determining a time point of delayed playing based on the delayed playing command;
S404, acquiring description information or full data of the target video file; and
S405, pushing, through the communication connection, the description information or the full data of the target video file to the smart TV for playing;
wherein, the step S405 specifically is:
at the time point of delayed playing, pushing, through the communication connection, the description information or the full data of the target video file to the smart TV for playing; or
pushing, through the communication connection, the description information or the full data of the target video file to the smart TV, and sending a command of playing a target video to the smart TV at the time point of delayed playing so that the smart TV plays the target video.

In another preferred embodiment of the above embodiment, the following steps are further included before the step S402:
S4011: receiving, through the user operation entry, a search command which is sent by the user and used for searching for the target video file;
S4012: acquiring, based on the search command, relevant information of the target video file from an application server;
S4013: judging whether the smart TV can establish a communication connection with the application server; and if yes, turning to a step S4014, and otherwise, turning to a step S4015;
S4014: downloading, by the smart TV, the full data of the target video file from the application server according to the relevant information; and turning to the step S402;
S4015: acquiring the full data of the target video file from the application server, and turning to the step S402.

It needs to be noted that, in each of the above embodiments, the application server may be one server dedicated to providing the smart TV with mass video files or a third-party server only providing video files of one type. Correspondingly, in some cases, the application server and the relay server substantially are the same server.

For the above-mentioned method embodiments, for the sake of simple description, all the method embodiments are expressed as a series of motion combinations; however, those skilled in the art should know that the present disclosure is not limited by the described motion order because some steps can be executed in other orders or simultaneously according to the present disclosure.

Secondly, those skilled in the art also should know that the method embodiments all are preferred embodiments, and motions and modules involved therein are not always necessary for the present disclosure.

Corresponding to the method embodiments for the mobile communication terminal to control the smart TV to play the video file of the present disclosure, device embodiments for a mobile communication terminal to control a smart TV to play a video file are further provided, which are specifically described below in combination with the accompanying drawings.

### Embodiment 5

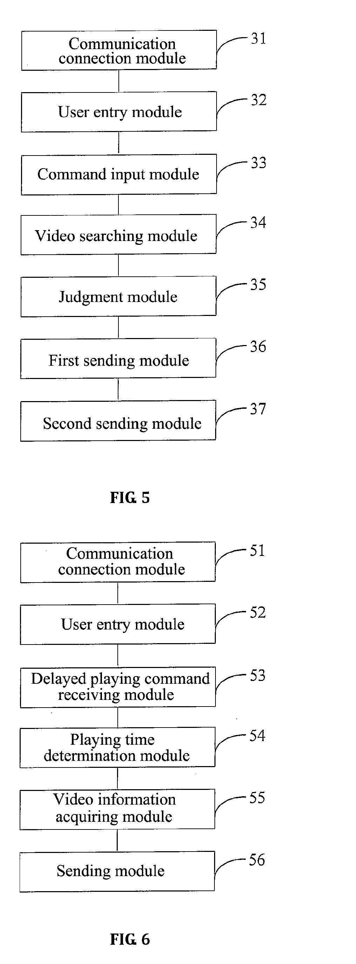

Referring to Fig. 5, illustrated is a structural block diagram of a device embodiment for a mobile communication terminal to control a smart TV to play a video file of the present disclosure, including:
a communication connection module 31 configured to establish communication connections between the mobile communication terminal and the smart TV as well as an application server;
wherein, the communication connection process of the mobile communication terminal with the smart TV may be: acquiring an IP and a port of the smart TV by using a DLNA protocol and establishing an HTTP connection with the smart TV; and the mobile communication terminal may be in communication connection with the application server through 2G and 3G networks.

A user entry module 32 configured to provide a user operation entry in a user interface of the mobile communication terminal;
wherein, specifically, the user entry module 32 may be configured to provide the user operation entry by displaying an operable button, or prompting text input or prompting voice input in the user interface of the mobile communication terminal.

A command input module 33 configured to receive, through the user operation entry, a search command which is sent by a user and used for searching for a target video file.

A video searching module 34 configured to acquire, based on the search command, relevant information of the target video file from the application server.

A judgment module 35 configured to judge whether the smart TV can establish a communication connection with the application server;
wherein, specifically, the judgment module 35 may specifically include:
a command receiving submodule configured to receive, through the user operation entry, a command that is sent by the user and used for acquiring a network connection status of the smart TV;
a command sending submodule configured to send, through the communication connection, the command to the smart TV; and
a network status parameter acquiring module configured to receive, through the communication connection, network connection status parameters fed back by the smart TV, and judge whether the smart TV can establish the communication connection with the application server according to the network connection status parameters.

A first sending module 36 configured to, if the circumstance that the smart TV can establish the communication connection with the application server, send the relevant information to the smart TV and send a playing command to the smart TV, so that the smart TV downloads streaming media data of the target video file from the application server according to the relevant information and plays the streaming media data;
wherein, in case that the smart TV establishes the communication connection with the application server, the operation of sending the relevant information of the target video file to the smart TV and sending the playing command to the smart TV specifically includes: providing a second user operation entry within a video search result display interface, and receiving, through the second user operation entry, a command of sending the relevant information of the target video file to the smart TV as well as a command of triggering the smart TV to play the target video.

The operation of sending the relevant information of the target video file to the smart TV and sending the playing command to the smart TV also may specifically include:
providing a third user operation entry within the video search result display interface, and receiving, through the third user operation entry, a command of entering a detail page of the target video file; and
receiving, through a preset button control within the detail page of the target video file, the command of sending the relevant information of the target video file to the smart TV and the command of triggering the smart TV to play the target video.

A second sending module 37 configured to, if the smart TV can not establish the communication connection with the application server, acquire the full data of the target video file from the application server, and send, through the communication connection between the mobile communication terminal and the smart TV, the full data to the smart TV for playing.

In another device embodiment of the present disclosure, it further may include: a third sending module configured to, if the smart TV can not establish the communication connection with the application server, send the relevant information of the target video file to a relay server, so that the relay server downloads the full data of the target video from the application server side according to the relevant information, and then send, through a communication connection between the relay server and the smart TV, the full data in the form of a streaming media to the smart TV in groups for playing.

Besides, on the basis of the various above-mentioned device embodiments of the present disclosure, the device further may include:
a feedback module configured to receive and synchronously display playing prompting information fed back by the smart TV to the target video file.

By adopting the method and the device for the mobile communication terminal to control the smart TV to play the video file provided by the embodiments of the present disclosure, compared with condition limitations such as inconvenient operations due to searching application by using a remote controller, requirement that the remote controller must emit control signals by facing a smart TV and so on in the prior art, the present disclosure may implement searching and playing of a target video file for the smart TV through the mobile communication terminal, and the operations are convenient and fast.

Further, even though the smart TV can not establish the communication connection with the application server, the full data of the target video file can be downloaded into the mobile communication terminal first, and then sent, through the communication connection between the communication terminal and the smart TV, such as common local area network connection, to the smart TV for playing.

In another device embodiment of the present disclosure, the command input module 33 is further configured to receive, through the user operation entry, a delayed playing command which is sent by the user and used for sending the target video file to the smart TV. The device further includes: a delay determination module configured to determine a time point of delayed playing based on the delayed playing command. Wherein the first sending module 36 specifically executes the following step: at the time point of delayed playing, sending the relevant information to the smart TV and sending a playing command to the smart TV; or when the delayed playing command is received, sending the relevant information to the smart TV, and sending a playing command to the smart TV at the time point of delayed playing. Wherein, the second sending module 37 specifically executes the following step: at the time point of delayed playing, sending the full data to the smart TV and sending a playing command to the smart TV; or when the delayed playing command is received, sending the full data to the smart TV, and sending a playing command to the smart TV at the time point of delayed playing;

In another device embodiment of the present disclosure, the delay determination module specifically executes the following steps: based on the delayed playing command, enabling a thread for continuously acquiring a playing status of a player of the smart TV; and determining a time point when the thread finds out that playing of a preset playing program in the player of the smart TV is finished as the time point of delayed playing.

In another device embodiment of the present disclosure, the delay determination module specifically executes the following step: determining the time point of delayed playing according to time information carried in the delayed playing command.

### Embodiment 6

Referring to Fig. 6, illustrated is a structural block diagram of a device for a mobile communication terminal to control a smart TV to play a video file of the present disclosure, including:
a communication connection module 51 configured to establish a communication connection between the mobile communication terminal and the smart TV;
wherein, the communication connection process between the mobile communication terminal and the smart TV may be: acquiring an IP and a port of the smart TV by using a DLNA protocol and establishing an HTTP connection with the smart TV.

A user entry module 52 configured to provide a user operation entry in a user interface of the mobile communication terminal;
wherein, specifically, the user entry module 52 may be configured to provide the user operation entry by displaying an operable button, or prompting text input or prompting voice input in the user interface of the mobile communication terminal;
in addition, in another optional embodiment of the present disclosure, the user inlet module 52 may further specifically include:
a pushing time setting submodule configured to receive a command of setting specific pushing time from a user; and
a pushing submodule configured to receive a command of triggering pushing a target video from the user.

A delayed playing command receiving module 53 configured to receive, through the user operation entry, a command which is sent by a user and used for sending a target video file to the smart TV side for delayed playing;
a playing time determination module 54 configured to determine a time point of delayed playing based on the delayed playing command;
a video information acquiring module 55 configured to acquire description information or full data of the target video file; and
a sending module 56 configured to push, at the time point of delayed playing and through the communication connection, the relevant information or the full data of the target video file to the smart TV for playing.

### Embodiment 7

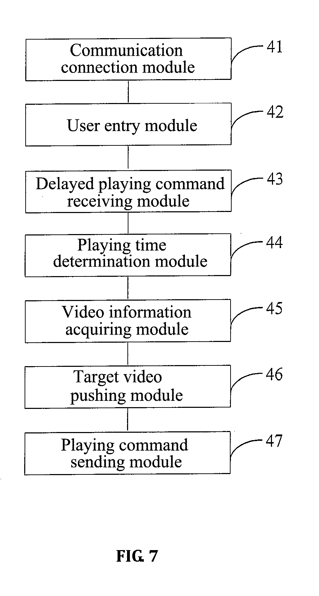

Fig. 7 shows a structural block diagram for a mobile communication terminal to control a smart TV to play a video file of the present disclosure, including:
a communication connection module 41 configured to establish a communication connection between the mobile communication terminal and the smart TV in advance;
a user entry module 42 configured to provide a user operation entry in a user interface of the mobile communication terminal;
a delayed playing command receiving module 43 configured to receive, through the user operation entry, a command which is sent by a user and used for pushing a target video file to the smart TV for delayed playing;
a playing time determination module 44 configured to determine a time point of delayed playing based on the delayed playing command;
a video information acquiring module 45 configured to acquire relevant information or full data of the target video file;
a target video pushing module 46 configured to push, through the communication connection, the relevant information or the full data of the target video file to the smart TV; and
a playing command sending module 47 configured to send a command of playing the target video to the smart TV at the time point of delayed playing, so that the smart TV plays the target video.

Wherein, most functional modules in the embodiment shown in Fig. 7 are the same as or similar to the corresponding functional modules in the embodiment shown in Fig. 6, but the difference there between lies in that: the time of pushing the relevant information or the full data of the target video file by the target video pushing module 46 may be that the pushing operation can be executed when the delayed playing command is received, while the playing command sending module 47 sends the command of playing the target video to the smart TV only at the time point of delayed playing determined by the playing time determination module 44, so that the smart TV enables the process of playing target video at the determined time point.

Certainly, control on the time point of delayed playing of the target video also may be mainly completed on the smart TV side; for example, after the smart TV receives the relevant information or the full data of the target video, a timer or a thread of continuously monitoring a playing status of a video player may be enabled on the smart TV side to realize delayed playing. The process of realizing control on the smart TV to delay playing the target video file on the mobile communication terminal side is mainly recorded in the present disclosure, and therefore, the specific implementation manner on the smart TV side is not described in detail.

### Embodiment 8

This embodiment is a device embodiment for a mobile communication terminal to control a smart TV to delay playing a video of the present disclosure, specifically including:
a communication connection module 81 configured to establish a communication connection between the mobile communication terminal and the smart TV in advance;
a user entry module 82 configured to provide a user operation entry in a user interface of the mobile communication terminal;
a delayed playing command receiving module 83 configured to receive, through the user operation entry, a command which is sent by a user and used for pushing a target video file to the smart TV for delayed playing;
a playing time determination module 84 configured to determine a time point of delayed playing based on the delayed playing command;
a video information acquiring module 85 configured to acquire description information or full data of the target video file; and
a sending module 86 configured to push, through the communication connection, the description information or the full data of the target video file to the smart TV for playing;
wherein, the operation of pushing, through the communication connection, the description information or the full data of the target video file to the smart TV for playing specifically is:
at the time point of delayed playing, pushing, through the communication connection, the description information or the full data of the target video file to the smart TV for playing; or
pushing, through the communication connection, the description information or the full data of the target video file to the smart TV for playing, and at the time point of delayed playing, sending a command of playing the target video to the smart TV so that the smart TV plays the target video.

In another preferred embodiment of this device embodiment, it further includes:
a command input module 87 configured to receive, through the user operation entry, a search command which is sent by a user and used for searching for the target video file;
a video searching module 88 configured to acquire, based on the search command, the relevant information of the target video file from the application server; and
a judgment module 89 configured to judge whether the smart TV can establish a communication connection with the application server;
wherein, the sending module 86 specifically includes:
a first sending module 861 configured to, if the smart TV can establish the communication connection with the application server, send the relevant information to the smart TV and send a playing command to the smart TV, so that the smart TV downloads the full data of the target video file from the application server according to the relevant information and plays the full data at the time point of delayed playing; and
a second sending module 862 configured to, if the smart TV can not establish the communication connection with the application server, acquire the full data of the target video file from the application server, send the full data to the smart TV, and send a playing command to the smart TV, so that the smart TV plays the full data at the time point of delayed playing.

### Embodiment 9

An embodiment of the present disclosure further provides a computer-readable recording medium on which a program for executing any method of the embodiments of the present disclosure is recorded.

The computer-readable recording medium includes any mechanism for storing or transmitting information in a computer (i.e. computer)-readable form. For example, a machine-readable medium includes a read-only memory (ROM), a random access memory (RAM), a magnetic disk storage medium, an optical storage medium, a flash storage memory, propagated signals in electrical, optical, acoustical or other form (i.e., carriers, infrared signals, digital signal, etc.), and the like.

In conclusion, by employing the method and the device for the mobile communication terminal to control the smart TV to play the video file provided by the present disclosure, a user, when searching for the target video on the mobile communication terminal, can set a moment of pushing the target video to the smart TV or a moment of sending a command of playing the target video to the smart TV according to own time arrangement, and therefore, the degree of freedom that the mobile communication terminal controls the smart TV to delay playing the target video is greatly enhanced.

In addition, as user operation interfaces of most existing mobile communication terminal devices are quite friendly and various functions and operations are simple and easy to learn, users can search through the mobile communication terminals more conveniently and quickly, compared with a remote controller. Additionally, the existing mobile communication terminals generally each have a touch screen or a voice function, and therefore, a video searching command can be sent to a server or a video playing command and the full data of a target video can be sent to a smart TV just by finger pressing or sentence saying, and the operations are simpler, convenient and fast. Meanwhile, as video searching is completed on the mobile communication terminal side, the occurrence of a TV program playing interruption event due to the searching application is avoided and the user experience of the smart TV is enhanced indirectly.

Each embodiment in this description is described in a progressive manner, and in each embodiment, the differences between the embodiment and other embodiments are mainly explained; the same and similar parts of the various embodiments refer to each other. The system embodiments are just simply described because they are substantially similar to the method embodiments, and correlations there between just refer to one part of descriptions of the method embodiments.

The method and the device for the mobile communication terminal to control the smart TV to play the video file and the method and the device for the mobile communication terminal to control the smart TV to delay playing the video provided by the present disclosure are described in detail above. In this text, specific examples are utilized to explain the principles and the implementation manners of the present disclosure, and the foregoing descriptions of the embodiments are merely used for helping to understand the method of the present disclosure and the main ideas thereof; meanwhile, for those ordinary skilled in the art, alterations will be made to the specific embodiments and the application range according to the ideas of the present disclosure; in conclusion, the contents of the description should not be understood as limitations to the present disclosure.

## Claims

1. A method for a mobile communication terminal to control a smart TV to play a video file, wherein the mobile communication terminal establishes communication connections with the smart TV and an application server in advance; on the mobile communication terminal side, the method comprises:
providing a user operation entry in a user interface of the mobile communication terminal;
receiving, through the user operation entry, a search command which is sent by a user and used for searching for a target video file;
acquiring, based on the search command, relevant information of the target video file from the application server;
judging whether the smart TV can establish a communication connection with the application server;
if the smart TV can establish the communication connection with the application server, sending the relevant information to the smart TV and sending a playing command to the smart TV, so that the smart TV downloads full data of the target video file from the application server according to the relevant information and plays the full data; and
if the smart TV can not establish the communication connection with the application server, acquiring the full data of the target video file from the application server, sending the full data to the smart TV, and sending a playing command to the smart TV, so that the smart TV plays the full data.

2. The method for the mobile communication terminal to control the smart TV to play the video file of claim 1, wherein, after judging whether the smart TV can establish the communication connection with the application server, the method further comprises:
if the smart TV can not establish the communication connection with the application server, sending the relevant information to a relay server, so that the relay server downloads the full data from the application server according to the relevant information, and then sending, through a communication connection between the relay server and the smart TV, the full data in the form of streaming media to the smart TV in groups for playing.

3. The method for the mobile communication terminal to control the smart TV to play the video file of claim 1 or 2, wherein the step of providing the user operation entry in the user interface of the mobile communication terminal comprises:
providing the user operation entry in such a manner of displaying an operable button in the user interface of the mobile communication terminal; or
providing the user operation entry in such a manner of prompting text input in the user interface of the mobile communication terminal; or
providing the user operation entry in such a manner of prompting voice input in the user interface of the mobile communication terminal.

4. The method for the mobile communication terminal to control the smart TV to play the video file of claim 1 or 2, wherein the step of judging whether the smart TV can establish the communication connection with the application server comprises:
receiving, through the user operation entry, a status acquiring command which is sent by a user and used for acquiring a network connection status of the smart TV;
sending the status acquiring command to the smart TV; and
receiving network connection status parameters fed back by the smart TV, and judging whether the smart TV can establish the communication connection with the application server according to the network connection status parameters.

5. The method for the mobile communication terminal to control the smart TV to play the video file of claim 1 or 2, further comprising:
receiving and synchronously displaying playing prompting information fed back by the smart TV to the target video file.

6. The method for the mobile communication terminal to control the smart TV to play the video file of claim 1, further comprising:
receiving, through the user operation entry, a delayed playing command which is sent by a user and used for sending the target video file to the smart TV for delayed playing;
determining a time point of delayed playing based on the delayed playing command;
acquiring description information or the full data of the target video file; and
pushing, through the communication connection, the description information or the full data of the target video file to the smart TV for playing, wherein the step of pushing, through the communication connection, the description information or the full data of the target video file to the smart TV for playing specifically includes:
at the time point of delayed playing, pushing, through the communication connection, the description information or the full data of the target video file to the smart TV for playing; or
pushing, through the communication connection, the description information or the full data of the target video file to the smart TV, and sending a command of playing a target video to the smart TV at the time point of delayed playing so that the smart TV plays the target video.

7. The method for the mobile communication terminal to control the smart TV to play the video file of claim 6, wherein the step of determining the time point of delayed playing based on the delayed playing command comprises:
based on the delayed playing command, enabling a thread for continuously acquiring a playing status of a player of the smart TV; and
determining a time point when the thread finds out that playing of a preset playing program in the player of the smart TV is finished as the time point of delayed playing.

8. The method for the mobile communication terminal to control the smart TV to play the video file of claim 6, wherein the step of determining the time point of delayed playing based on the delayed playing command specifically is:
determining the time point of delayed playing according to time information carried in the delayed playing command.

9. A method for a mobile communication terminal to control a smart TV to delay playing a video, wherein the mobile communication terminal establishes a communication connection with the smart TV in advance; on the mobile communication terminal side, the method comprises:
providing a user operation entry in a user interface of the mobile communication terminal;
receiving, through the user operation entry, a command which is sent by a user and used for sending a target video file to the smart TV for delayed playing;
determining a time point of delayed playing based on the delayed playing command;
acquiring description information or full data of the target video file; and
pushing, through the communication connection, the description information or the full data of the target video file to the smart TV for playing;
wherein, the step of pushing, through the communication connection, the description information or the full data of the target video file to the smart TV for playing specifically comprises:
at the time point of delayed playing, pushing, through the communication connection, the description information or the full data of the target video file to the smart TV for playing; or
pushing, through the communication connection, the description information or the full data of the target video file to the smart TV, and sending a command of playing a target video to the smart TV at the time point of delayed playing so that the smart TV plays the target video.

10. The method for the mobile communication terminal to control the smart TV to delay playing the video of claim 9, wherein before the step of receiving, through the user operation entry, the command which is sent by the user and used for sending the target video file to the smart TV for delayed playing, the method further comprises:
receiving, through the user operation entry, a search command which is sent by the user and used for searching for the target video file;
acquiring, based on the search command, relevant information of the target video file from an application server;
judging whether the smart TV can establish a communication connection with the application server;
if the smart TV can establish the communication connection with the application server, downloading, by the smart TV, the full data of the target video file from the application server according to the relevant information; and
if the smart TV can not establish the communication connection with the application server, acquiring the full data of the target video file from the application server.

11. A device for a mobile communication terminal to control a smart TV to play a video file, comprising:
a communication connection module configured to establish communication connections between the mobile communication terminal and the smart TV as well as an application server;
a user entry module configured to provide a user operation entry in a user interface of the mobile communication terminal;
a command input module configured to receive, through the user operation entry, a search command which is sent by a user and used for searching for a target video file;
a video searching module configured to acquire, based on the search command, relevant information of the target video file from the application server;
a judgment module configured to judge whether the smart TV can establish a communication connection with the application server;
a first sending module configured to, if the circumstance that the smart TV can establish the communication connection with the application server, send the relevant information to the smart TV and send a playing command to the smart TV, so that the smart TV downloads full data of the target video file from the application server according to the relevant information and plays the full data; and
a second sending module configured to, if the smart TV can not establish the communication connection with the application server, acquire the full data of the target video file from the application server, send the full data to the smart TV, and send a playing command to the smart TV, so that the smart TV plays the full data.

12. The device for the mobile communication terminal to control the smart TV to play the video file of claim 11, further comprising:
a third sending module configured to, if the smart TV can not establish the communication connection with the application server, send the relevant information to a relay server, so that the relay server downloads the full data from the application server according to the relevant information, and then send, through a communication connection between the relay server and the smart TV, the full data in the form of a streaming media to the smart TV in groups for playing.

13. The device for the mobile communication terminal to control the smart TV to play the video file of claim 11 or 12, further comprising:
a feedback module configured to receive and synchronously display playing prompting information fed back by the smart TV to the target video file.

14. The device for the mobile communication terminal to control the smart TV to play the video file of claim 11, wherein
the command input module is further configured to receive, through the user operation entry, a delayed playing command which is sent by a user and used for sending the target video file to the smart TV for delayed playing;
the device further comprises: a delay determination module configured to determine a time point of delayed playing based on the delayed playing command; and
a video information acquiring module configured to acquire description information or the full data of the target video file;
wherein, the first sending module specifically executes the following step:
at the time point of delayed playing, sending the relevant information to the smart TV and sending a playing command to the smart TV; or
when the delayed playing command is received, sending the relevant information to the smart TV, and sending a playing command to the smart TV at the time point of delayed playing;
wherein, the second sending module specifically executes the following step:
at the time point of delayed playing, sending the full data to the smart TV and sending a playing command to the smart TV; or
when the delayed playing command is received, sending the full data to the smart TV, and sending a playing command to the smart TV at the time point of delayed playing;

15. The device for the mobile communication terminal to control the smart TV to play the video file of claim 14, wherein the delay determination module specifically executes the following steps:
based on the delayed playing command, enabling a thread for continuously acquiring a playing status of a player of the smart TV; and
determining a time point when the thread finds out that playing of a preset playing program in the player of the smart TV is finished as the time point of delayed playing.

16. The device for the mobile communication terminal to control the smart TV to play the video file of claim 14, wherein the delay determination module specifically executes the following step:
determining the time point of delayed playing according to time information carried in the delayed playing command.

17. A device for a mobile communication terminal to control a smart TV to delay playing a video, comprising:
a communication connection module configured to establish a communication connection between the mobile communication terminal and the smart TV in advance;
a user entry module configured to provide a user operation entry in a user interface of the mobile communication terminal;
a delayed playing command receiving module configured to receive, through the user operation entry, a command which is sent by a user and used for sending a target video file to the smart TV for delayed playing;
a playing time determination module configured to determine a time point of delayed playing based on the delayed playing command;
a video information acquiring module configured to acquire description information or full data of the target video file; and
a sending module configured to push, through the communication connection, the description information or the full data of the target video file to the smart TV for playing;
wherein, the operation of pushing, through the communication connection, the description information or the full data of the target video file to the smart TV for playing specifically comprises:
at the time point of delayed playing, pushing, through the communication connection, the description information or the full data of the target video file to the smart TV for playing; or
pushing, through the communication connection, the description information or the full data of the target video file to the smart TV, and sending a command of playing a target video to the smart TV at the time point of delayed playing so that the smart TV plays the target video.

18. The device for the mobile communication terminal to control the smart TV to delay playing the video of claim 17, further comprising:
a command input module configured to receive, through the user operation entry, a search command which is sent by the user and used for searching for the target video file;
a video search module configured to acquire, based on the search command, relevant information of the target video file from an application server; and
a judgment module configured to judge whether the smart TV can establish a communication connection with the application server;
the sending module specifically comprises:
a first sending module configured to, if the smart TV can establish the communication connection with the application server, send the relevant information to the smart TV and send a playing command to the smart TV, so that the smart TV downloads the full data of the target video file from the application server according to the relevant information and plays the full data at the time point of delayed playing; and
a second sending module configured to, if the smart TV can not establish the communication connection with the application server, acquire the full data of the target video file from the application server, send the full data to the smart TV, and send a playing command to the smart TV, so that the smart TV plays the full data at the time point of delayed playing.

19. A computer-readable recording medium on which a program for executing any method of claims 1-10 is recorded.
